Europäisches Patentamt

European Patent Office

Office européen des brevets

(19)

(11) Veröffentlichungsnummer: **0 237 810**
**B1**

(12) **EUROPÄISCHE PATENTSCHRIFT**

(45) Veröffentlichungstag der Patentschrift:
31.01.90

(51) Int. Cl.⁴: **B64C 1/14**

(21) Anmeldenummer: 87102228.1

(22) Anmeldetag: 17.02.87

(54) Frachttor mit Gewichtsausgleichsmechanismus.

(30) Priorität: 15.03.86  DE 3608735

(43) Veröffentlichungstag der Anmeldung:
23.09.87 Patentblatt 87/39

(45) Bekanntmachung des Hinweises auf die Patenterteilung:
31.01.90 Patentblatt 90/5

(84) Benannte Vertragsstaaten:
FR GB SE

(56) Entgegenhaltungen:
EP-A- 0 105 082
EP-A- 0 114 324
DE-U- 7 534 617
US-A- 4 601 446

(73) Patentinhaber: **Messerschmitt-Bölkow-Blohm Gesellschaft mit beschränkter Haftung, Robert-Koch-Strasse, D-8012 Ottobrunn(DE)**

(72) Erfinder: **Nitsch, Dieter, Lüderitzer Strasse 24, D-2870 Delmenhorst(DE)**

ACTORUM AG

**Beschreibung**

Die Erfindung bezieht sich auf ein Frachttor mit Gewichtsausgleichsmechanismus für Verkehrsmittel, insbesondere für Flugzeuge.

Frachttore für Verkehrsmittel, insbesondere für Flugzeuge, sind als nach innen und nach außen zu öffnende Einrichtungen bekannt, die den freien Zugang zu dem Inneren des Verkehrsmittels erlauben (plug-typ-Tore). Da diese Frachttore in der Regel ein hohes Gewicht aufweisen, werden zur Entlastung des Bedienungspersonals mechanische oder elektrische Öffnungs- und Schließhilfen in das Frachttor oder das Verkehrsmittel eingebaut.

Die bisher bekannten mechanischen Öffnungs- und Schließhilfen bestehen aus Federelementen unterschiedlicher Bauart, die beim Öffnen des Frachttores dessen Öffnungsbewegung unterstützen und/oder das Gewicht des Frachttores ausgleichen. Elektrische Öffnungs- und Schließhilfen arbeiten mit Hilfe von Elektromotoren und entsprechender Steuerelektronik (siehe auch EPS 0 105 082, EPS 0 114 324 und DE-OS 29 07 550).
Die Nachteile der bekannten elektrischen Öffnungs- und Schließhilfen bestehen darin, daß zum Betrieb eine elektrische Stromversorgung erforderlich ist. Zudem sind sie schwerer und aufgrund ihrer komplizierten Struktur störanfälliger als mechanische Einrichtungen.

Bei den mechanischen Öffnungs- und Schließhilfen mit Hilfe von Federelementen unterschiedlicher Bauart müssen Zusatzeinrichtungen, wie Dämpfungselemente, eingebaut werden, wenn die Unterstützung der Öffnungsbewegung keine beschleunigte Bewegung erzeugen soll. Dies ist notwendig, um das Bedienungspersonal nicht durch ein zu schnelles Aufschwingen des Frachttores zu gefährden. Wenn die mechanische Öffnungs- und Schließhilfe aber nur einen Gewichtsausgleich des Frachttores, zum Beispiel mit Hilfe einer Tensatorfeder (aufgewickeltes Federband) bewirkt, so besteht die Möglichkeit von Funktionsstörungen durch Verdrallen dieser Feder.

In der DE-U 7 534 617 ist eine Schachtabdeckung mit einer Öffnungshilfevorrichtung beschrieben, bei welcher ein vorgespannter Torsionsfederstab vorgesehen ist. Der Torsionsfederstab ist im Bereich der die schwenkbare Schachtabdeckung umgebenden Rahmenstruktur angeordnet, so daß hierbei die wesentlichen Elemente des Gewichtsausgleichmechanismus im Flügelrahmenbereich untergebracht werden müssen.
Der Erfindung liegt daher die Aufgabe zugrunde, eine Öffnungs- und Schließhilfe für ein Frachttor zu entwickeln, die die oben genannten Nachteile vermeidet. Gemäß der Erfindung wird diese Aufgabe dadurch gelöst, daß das Gewicht des Frachttores durch einen Mechanismus auf der Basis einer Drehstabfeder ausgeglichen wird. Hierdurch werden zum Öffnen und Schließen des Frachttors nur noch die Reibungskräfte in dieser Einrichtung überwunden.

Die erfinderische Lösung dieser Aufgabe ergibt sich aus den Merkmalen des Patentanspruchs, die mit Hilfe der Zeichnung erläutert werden. Es zeigen:

Fig. 1 eine schematische Zeichnung der Getriebetechnik des Gewichtsausgleichsmechanismus,
Fig. 2 das Frachttor in verschiedenen Ansichten,
Fig. 3 die Befestigung des Frachttores mit Hilfe einer vorderen Hohlwelle und
Fig. 4 die Befestigung des Frachttores mit Hilfe einer hinteren Hohlwelle.

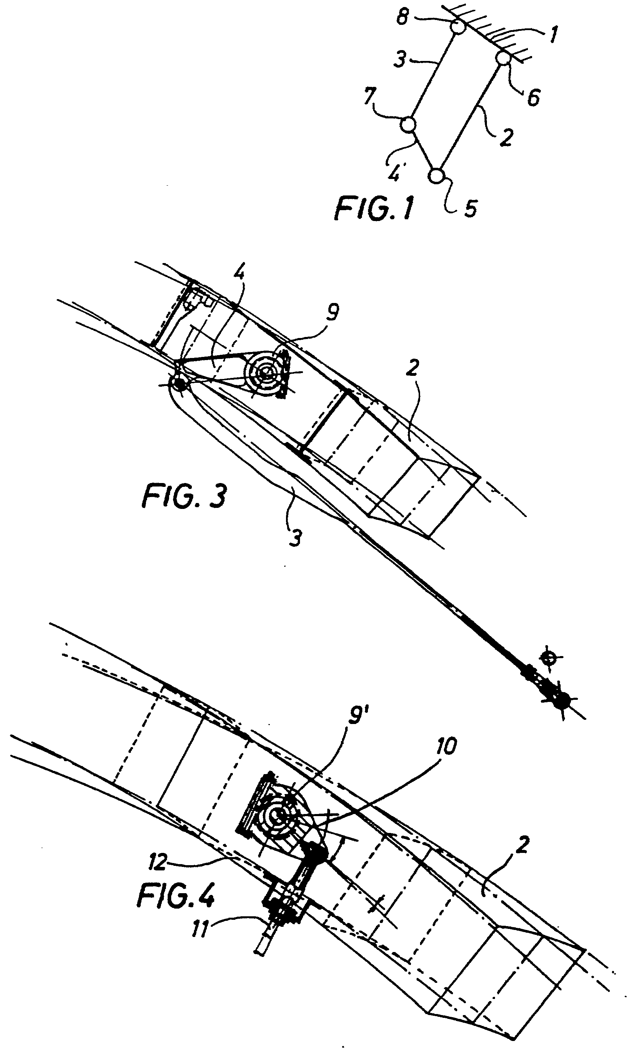

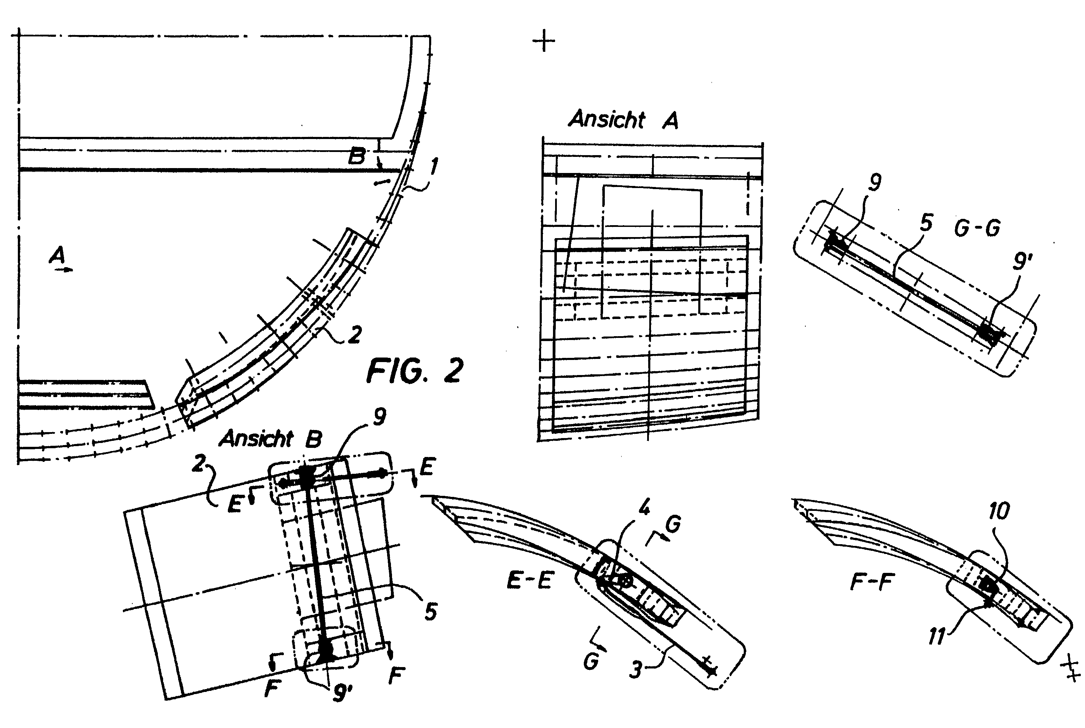

Fig. 1 verdeutlicht die Getriebetechnik dieses Gewichtsausgleichsmechanismus. Am Torrahmen 1 ist das Frachttor 2 direkt über dem gewöhnlichen Drehgelenk 6 befestigt. Das Gelenk 5 zwischen Frachttor 2 und Hebel 4 wird durch einen Drehstab gebildet. Der Hebel 4 wiederum ist über die gewöhnlichen Drehgelenke 7 und 8 und der Stange 3 mit dem Torrahmen 1 verbunden. Die Getriebetechnik wurde dabei so gewählt, daß sich das Gewichtsmoment im Drehgelenk 6 und das Drehstabmoment im Gelenk 5 in ihrer Wirkung auf die Kette der Konstruktionselemente in jeder Stellung nahezu aufhebt.

Fig. 2 stellt das Frachttor 2 in verschiedenen Perspektiven dar. Ansicht B zeigt, daß der Drehstab 5 mit zwei Hohlwellen 9 und 9' verbunden ist, die jeweils am vorderen und am hinteren Torspant gelagert sind. Die Achse des Drehstabes 5 und die der Hohlwellen 9 und 9' verlaufen dabei parallel zur Drehachse 6 des Frachttores 2.

Fig. 3 zeigt die vordere Hohlwelle 9 in dem Frachttor 2, die über den Hebel 4 und die Stange 3 mit dem Torrahmen verbunden ist.

Fig. 4 stellt die hintere Hohlwelle 9' in dem Frachttor 2 dar, welche den weiteren Hebel 10 trägt, der über eine Spannschraube 11 gegen die Frachttorstruktur 12 fixiert ist.

Die Längen der Spannschraube 11 und der Stange 3 sind stufenlos einstellbar. Mit der Spannschraube 11 läßt sich die Spannung des Drehstabes 5 verändern. Die Längenänderung der Stange 3 ermöglicht eine Verstellung des Gewichtsausgleichs an maßgebender Stelle. Beide Maßnahmen erlauben eine Anpassung an die Toleranzen der Maße und des Gewichtes des Frachttores sowie der Wirksamkeit des Gewichtsausgleichsmechanismus.

**Patentansprüche**

1. Frachttor mit Gewichtsausgleichsmechanismus für Verkehrsmittel, insbesondere für Flugzeuge, wobei das Frachttor (2) ein nach innen zu öffnendes, um eine oberhalb des Frachttores angeordnete Achse drehbar gelagertes "plug-Type-Tor" ist, bei dem der Gewichtsaugleichsmechanismus mit Hilfe einer Drehstabfeder (5) so arbeitet, daß beim Betätigen des Frachttores nur noch Reibungskräfte zu überwinden sind, dadurch gekennzeichnet, daß das Frachttor (2) über eine Vorrichtung zur stufenlosen Einstellung der Wirksamkeit des Gewichtsausgleichsmechanismus und zur Anpassung an die Maßtoleranzen des Frachttores verfügt, wobei die Achse der Drehstabfeder (5) und die Drehachse (6) des Frachttores (2) parallel verlaufen, wobei die Drehstabfeder (5) mit ihren Enden jeweils in einer Hohlwelle (9, 9') befestigt ist, die Hohlwellen am vorderen bzw. hinteren Torspant befestigt, die Torsionskräfte der Drehstabfeder (5) aufnehmen, die vordere Hohlwelle (9) über einen Hebel (4) und eine in der Länge stufenlos einstellbaren Stange (3) mit dem Torrahmen (1) verbunden ist und die hintere Hohlwelle (9') einen weiteren Hebel (10) trägt, der mit Hilfe einer stufenlos einstellbaren Spannschraube (11) an der Frachttorstruktur (12) befestigt ist.

## Claims

A freight loading gate with weight balancing mechanism for traffic, more particularly for aircraft, in which the loading gate (2) is an inwardly openable "plug type gate" pivotally mounted about an axis above the loading gate, in which, the weight balancing mechanism operates with the aid of a torsion-bar spring (5) such that when actuating the loading gate only friction forces have to be overcome characterised in that the loading gate (2) has a device for continuous adjustment of the effectiveness of the weight balancing mechanism and for matching the weight tolerances of the loading gate, in which the axis of the torsion-bar spring (5) and the pivot axis (6) of the loading gate (2) run parallel, and the torsion bar spring (5) is fixed with its ends respectively in a hollow shaft (9, 9'), the hollow shafts, which are fixed to the front and rear gate spar respectively, accommodating torsion forces of the torsion bar spring (5), the front hollow shaft (9) being connected via a lever (4) and a rod (3) which may be adjusted continuously in length, to the gate support (1), and the rear hollow shaft (9') having a further lever (10), which is fixed with the aid of a continuously adjustable tensioning screw (11) to the loading gate structure (12).

## Revendications

Porte de chargement à mécanisme d'équilibrage du poids, pour des moyens de transport, en particulier pour des avions, la porte de chargement (2) étant du type s'ouvrant vers l'intérieur, porte "plug-type" montée tournante autour d'un axe disposé au-dessus de la porte de chargement, dans laquelle le mécanisme d'équilibrage de poids travaille à l'aide d'un ressort à barre de torsion (5), de façon que, lors de l'actionnement de la porte de chargement, il ne reste uniquement que des efforts de frottement à surmonter, caractérisée en ce que la porte de chargement (2) dispose d'un dispositif destiné à régler de manière progressive l'action du dispositif d'équilibrage du poids et à s'ajuster aux tolérances dimensionnelles de la porte de chargement, l'axe du ressort à barre de torsion (5) et l'axe de rotation de la porte de chargement (2) s'étendant parallèlement, le ressort à barre de torsion (5) étant fixé à chacune de ses extrémités dans un arbre creux 9, 9'), les arbres creux étant fixés aux membrures de portant avant et arrière supportant les efforts de torsion du ressort à barre de torsion (5), l'arbre creux (9) étant relié au cadre de porte (1) par l'intermédiaire d'un levier (4) et d'une tige (3) réglable en une position quelconque en longueur, et l'arbre creux arrière (9') portant un arbre (10) supplémentaire fixé sur la structure de porte de chargement (12) à l'aide d'une vis de serrage (11) réglable progressivement.

FIG.1

FIG. 3

FIG.4

Ansicht A

Ansicht B

FIG. 2

G-G

F-F

E-E